(19)

Europäisches
Patentamt
European
Patent Office
Office européen
des brevets

(11) **EP 2 587 220 A1**

(12) **EUROPEAN PATENT APPLICATION**

(43) Date of publication:
**01.05.2013 Bulletin 2013/18**

(51) Int Cl.:
**G01C 21/34** *(2006.01)*

(21) Application number: **11306383.8**

(22) Date of filing: **26.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **France Télécom
75015 Paris (FR)**

(72) Inventors:
• **Lopez Roldan, Jesus
28028 Madrid (ES)**
• **Molina Hernandez, Jesus
28005 Madrid (ES)**

(74) Representative: **Cabinet Plasseraud
52, rue de la Victoire
75440 Paris Cedex 09 (FR)**

(54) **Method and device for providing an optimised route path to find a parking place in an area**

(57)     The present invention relates a method for providing a driver with an optimised driving path to find a parking place in an area (NGBH), wherein a segment probability value ($P_{SSi}$) is assigned (300) to each one of a plurality of street segments ($SS_i$) belonging to this area, this segment probability value depending on the probability to find at least one parking place in this street segment, the optimised driving path (PTH) being determined (400) based on a computation using these segment probability values before being provided (500) to the driver. The present invention also relates to a computing device (11) able to perform such a method and a system comprising this computing device.

FIG. 6

EP 2 587 220 A1

## Description

## Field of the invention

The present invention relates to a method and device for providing a driver with an optimised route path to find a parking place in an area, which applies more specifically to the issue of finding a parking place for a car in a saturated environment such as a city centre.

## Background of the invention

Traffic congestion in large cities has been increasing dramatically in the recent years, substantially impacting people's daily life in terms of health, time and money lost, as well as causing negative effects on the cities atmosphere in terms of gas pollution.

Among the reasons for such traffic congestion, it is estimated that around thirty percent of the traffic in a city is caused by car drivers merely looking for a parking place in overcrowded city centres.

Technical solutions have been thus proposed to tackle this issue and help car drivers to find more easily a parking place. Such solutions usually rely on detecting and providing specific parking spots in the area where the driver wants to park his or her car.

For instance, patent applications US 2010/0017118 and US 2011/0106425 describes systems for guiding a car driver to potential parking places using real time parking-related information. Such systems rely thus on the use of real time data of existing parking place to help the car drivers finding a parking place.

However, such systems focus on very specific parking locations which are able to provide real time parking information. Beside, the necessary use of real time data limits the application of such systems and requires a specific technology able to deal with such real time data.

Moreover, these existing systems are not efficient in cases where a free parking place is first chosen by a car driver as a destination, but is taken later on by another car driver, which is very likely in situations where the parking occupation is near saturation. In such cases, the first driver can end up in a situation where he has chosen a parking route based on parking information at a certain moment, without actually finding a free parking place in the end.

## Summary of the invention

It is thus an object of the present invention to overcome the above-identified disadvantages of the existing parking guiding systems, by proposing a solution which relies on probabilistic data rather than on real time data.

In other words, an object of the present invention is to provide a technical solution which does not only look for concrete free parking locations, but rather determines a route which maximizes the probability to find a free parking place along the path to the driver's destination.

It is another object of the present invention to provide a technical solution which determines a route which maximizes the probability to find a free parking place along the path to the driver's destination without substantially increasing the driving time to the destination.

According to a first aspect of the present invention, there is provided a method for providing a driver with an optimised driving path to find a parking place in an area, comprising the steps of:

assigning a segment probability value to each one of a plurality of street segments belonging to this area, wherein the segment probability value depends on the probability to find at least one parking place in this street segment;

determining the optimised driving path based on a computation using at least this segment probability values; and

providing the driver with the calculated optimised driving path.

According to an embodiment of the present invention, the determination of the optimised driving path comprises:

assigning, to each one of a plurality of potential driving paths from the driver's location to the driver's destination, a path probability value which is computed using the segment probability values of the segment streets included in this potential driving path; and

selecting the potential driving path which is assigned with the highest path probability value among the plurality of potential driving paths.

Advantageously, for each of the plurality of potential driving paths, the path probability value is computed according to the following equation:

$$P_{PTHj} = 1 - \prod_k (1 - P_{SSk}),$$

where:

- $P_{PTHj}$ is the path probability value representing the probability to find at least one free parking place in the potential driving path;

- $P_{SSk}$ is the segment probability value representing the probability to find at least one free parking place in the street segment $SS_k$ ; and

- k is an index which designates all the street segment $SS_k$ included the potential driving path.

In an embodiment of the present invention wherein each of the street segments is further assigned with a segment driving time value, the optimised driving path is further determined based on these segment driving time values.

In such an embodiment, the determination of the optimised driving path advantageously further comprises:

assigning a path driving time value to each one of a plurality of potential driving paths from the driver's location to the driver's destination, this path driving time value being computed based on the segment driving time values assigned to the street segments included in the potential driving path; and

selecting, among the potential driving paths, at least one potential driving path which is assigned with a path driving time value that is smaller than, or equal to, a maximum driving time threshold;

wherein the selection of the optimised driving path is performed among the selected potential driving paths.

In particular, for each potential driving path, the path driving time value is computed according to the following equation:

$$T_{PTHj} = \sum_k T_{SSk}$$

where:

- $T_{PTHj}$ is the path driving time value which represents the time it takes to drive through the part of the potential driving path $P_{THj}$ which belongs to the area NGBH;
- $T_{SSK}$ is the segment driving time value which represents the time it takes to drive through the street segment $SS_k$; and
- k is an index which designates all the street segment $SS_k$ included in the potential driving path $PTH_j$.

In an embodiment of the present invention wherein a plurality of nodes are defined for all the places connecting at least two street segments in the area, each node is assigned with at least one driving time value representing the driving time to go from one of the street segments to another one of the street segments, and wherein, for each potential driving path, the path driving time value is computed according to the following equation:

$$T_{PTHj} = \sum_k T_{SSk} + \sum_{k',k''} T_{Nk',k''}$$

where :

- $T_{PTHj}$ is the path driving time value which represents the time it takes to drive through the part of the potential driving path $P_{THj}$ which belongs to the area NGBH;
- $T_{SSk}$ is the segment driving time value which represents the time it takes to drive through the street segment $SS_k$;
- $T_{Nk,k'}$ is the node driving time value which represents the time it takes to drive through the location designated by a node $N_i$ which connects street segment $SS_k$ with street segment $SS_{k'}$;
- k is an index which designates all the street segments $SS_k$ included in the potential driving path $PTH_j$; and
- k' and k" are indexes which designate all the pairs of street segments, included in the potential driving path $PTH_j$, which are connected via a node $N_i$.

Advantageously, the selection of the plurality of potential driving paths comprises:

computing the fastest driving path among all the potential driving paths from the driver's location to the driver's destination, using a cost optimisation algorithm applied on the segment driving time values;

computing the maximum driving time threshold according to the following equation :

$$T_{max} = T_{PTH\,max} * (1 + \varepsilon)_,$$

wherein :

- $T_{max}$ is the maximum driving time threshold;
- $T_{PTHmax}$ is the path driving time value which is assigned to the fastest driving path $PTH_{max}$; and
- $\varepsilon$ is an expansion factor, with $\varepsilon > 0$.

In an embodiment of the present invention, the method further comprises collecting parking related information and/or traffic related information in the area, this parking related information and/or traffic related information being used to compute the segment probability values and/or the segment driving time values.

In an embodiment of the present invention, the method further comprises identifying the area based on the driver's destination in this area.

In a further aspect of the present invention, there is provided a computer program product comprising instructions codes for implementing the steps of the above-described method for providing a driver with an optimised driving path to find a parking place in an area, when loaded and run on processing means of a data processing unit.

In a further aspect of the present invention, there is provided a computing device for providing a driver with an optimised driving path to find a parking place in an area, the device comprising a data processing unit and a data providing unit configured to provide the optimised driving path to the driver, wherein the data processing unit is configured to:

determine a plurality of street segments belonging to this area ;
assign, to each of these street segments, at least a segment probability value depending on the probability to find at least one parking place in the street segment; and
determine the optimised driving path based on a computation using these segment probability values.

In an embodiment of this computer device, the data processing unit is further configured to assign, to each of the street segments, a segment driving time value, the determination of the optimised driving path being based on a computation which uses these segment driving time values.

In a further aspect of the present invention, there is provided a system for providing a driver with an optimised driving path to find a parking place in an area, the system comprising the above-described computing device and a client device having a display screen, the data providing unit of the computing device being configured to transmit digital data representing the optimised driving path to the client device, and the client device being configured to display the optimised driving path on its display screen, based on the digital data representing the optimised driving path.

In an embodiment, this system further comprises at least one data collecting unit located in the area, wherein the data collecting unit is configured to transmit parking related information and/or traffic related information to the computing device, this parking related information and/or traffic related information being used in a computation, performed by the data processing unit of the computing device, in order to determine the optimised driving path.

## Brief Description of the Drawings

Other features and advantages of the invention will become apparent from the following description of non-limiting exemplary embodiments, with reference to the appended drawings, in which:

- Figure 1 shows a flow chart illustrating the steps of a method for providing a driver with an optimised route path to find a parking place in an area according to the present invention;
- Figure 2 shows a flow chart illustrating the calculation of the optimised driving path, based on a computation using the segment street values, in accordance with a first embodiment of the present invention;

- Figure 3 shows a flow chart illustrating the calculation of the optimised driving path, based on a computation using the segment street values and segment driving time values, in accordance with a second embodiment of the present invention;
- Figures 4A and 4B illustrate respectively the definition process of a node $N_i$ and a time cost table associated with this node $N_i$, in accordance with a third embodiment of the present invention;
- Figure 5 illustrates an example of the segmentation of an area into street segments according to the present invention; and
- Figure 6 shows a system for providing a user with an optimised route path to find a parking place in an area according to the present invention.

## Detailed Description of the Invention

Next some embodiments of the present invention are described in more detail with reference to the attached figures.

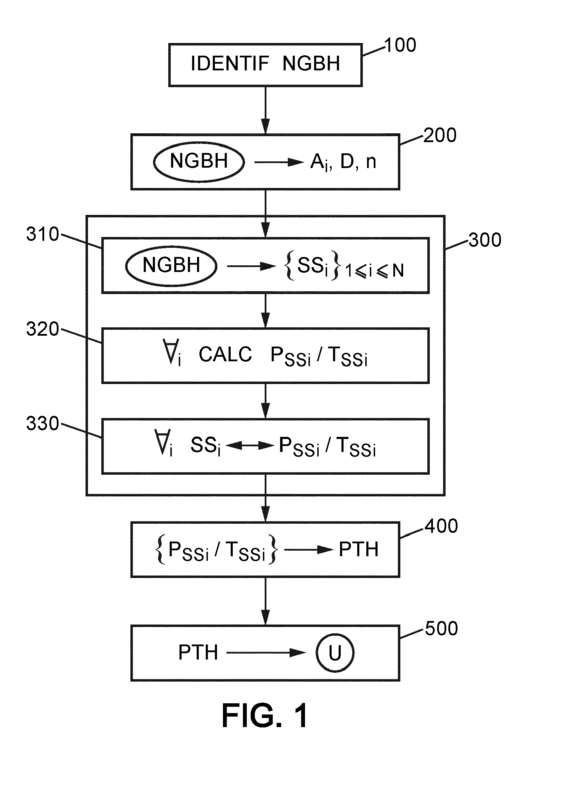

**Figure 1** shows a flow chart illustrating the steps of a method for providing a driver with an optimised route path to find a parking place in an area according to the present invention.

In this method, the area NGBH (typically a part or a neighbourhood of a city) where the user wants to park his or her vehicle is firstly advantageously identified (step 100), based on the driver's destination, which can be inputted by the driver himself or deduced in another way.

In particular, the area NGBH can be defined as being the area located around the driver's destination, within a radius parameter which can be either provided by the driver or predefined by configuration. This radius parameter defines thus the maximum distance around the driver's destination.

Once the area NGBH has been identified, information from this area is advantageously collected (step 200). Such information can be parking related information or traffic related information about this area, this information being either real time information or statistical information collected by data collecting sources as discussed later on.

At this stage, a plurality of street segments $SS_1,...,SS_i,...,SS_n$, belonging to this area NGBH, are defined and a segment probability value $P_{ssi}$ is assigned to each one of these street segments, this segment probability value $P_{ssi}$ depending on the probability to find at least one parking place in this street segment (step 300).

Such an assignment can be implemented by first identifying all the streets which belong to the area NGBH and then segmenting all these streets into n street segments $SS_1,...,SS_i,...,SS_n$ (step 310) for which it is possible to estimate a probability of find a free parking place.

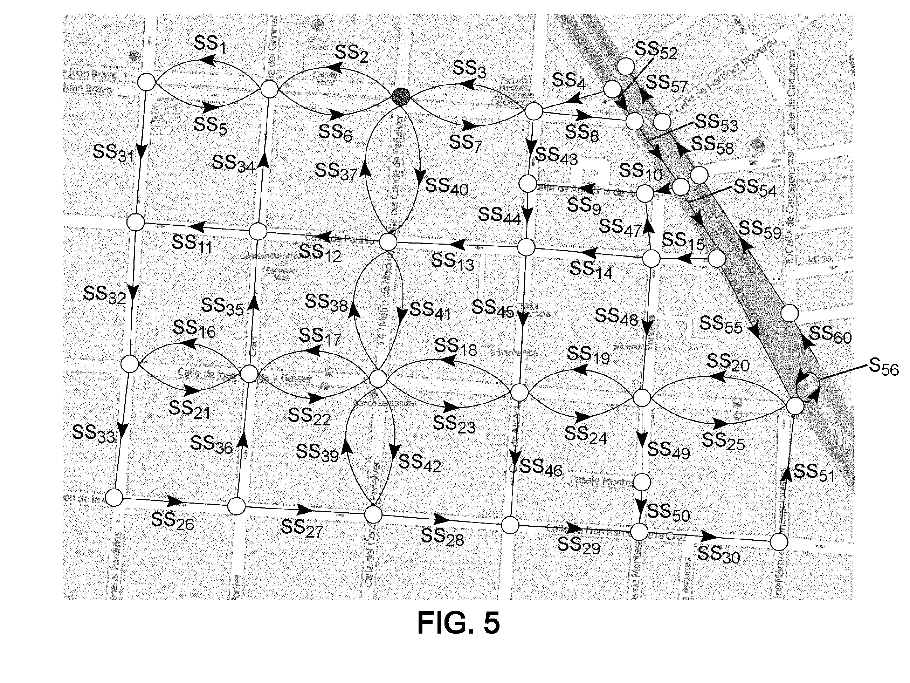

This segmentation is performed, for every street identified in the area NGBH, by segmenting the street at specifically defined segmentation points, which are typically intersection points with other streets, bifurcations, roundabouts or direction change spots. Beside, a two-way street segment can be further segmented in two different street segments, on for each direction. Such a segmentation process can be performed on the basis of a digital map of the area MGBH (such as a Google Map), the result of such a segmentation process being illustrated later with reference to figure 5.

Once the area NGBH has been segmented into n street segments $SS_1,...,SS_i,...,SS_n$, a segment probability value $P_{SSi}$ is computed for each street segment $SS_i$ (step 320), this segment probability value $P_{ssi}$ being a value, comprised between 0 and 1, which depends on the probability to find a free parking place in the street segment $SS_i$. The higher the value $P_{ssi}$ is, and the higher is the probability to find a parking place in the street segment $SS_i$, a segment probability value $P_{ssi}$ of 0 indicating that there is no chance at all to find a parking place in this street segment $SS_i$ whereas a segment probability value $P_{SSi}$ of 1 guarantees that there is one, or more, parking place in this street segment $SS_i$.

This segment probability value $P_{ssi}$ is typically computed using the collected parking related information.

More precisely, when parking related information about each parking place in the street segment $SS_i$ can be collected, it is possible to perform the computation of the segment probability values $P_{ssi}$ at a first granularity level (i.e. at the street segment level) which relies on information about individual parking places in street segments and is thus very precise.

In that case, the segment probability value $P_{ssi}$ can be computed according to the following equation:

$$P_{SSi} = 1 - \prod_k (1 - P_k),$$

where $P_k$ is the individual probability that the k-th parking place in street segment $SS_i$ is available and k is an index designating all the parking places in street segment $SS_i$.

In this case, the accuracy $A_k$ of the data collecting source which collects the parking related information determines the value of the individual probability $P_k$ in such a way that:

$P_k=A_k$ if the k-th parking place is reported to be free; or
$P_k=1-A_k$ if the k-th parking place is reported to be occupied.

It is also possible to perform the computation of segment probability value $P_{SSi}$ at a second granularity level (i.e. at the street level) or at a third granularity level (i.e. at the area level), for instance in situations where it is not possible to collect parking related information about the individual parking places in the street segments.

In these cases, the segment probability value $P_{SSi}$ is a function depending on information provided either by a statistical analysis or by empirical evaluation. For instance, the segment probability value $P_{ssi}$ can be defined as being a function $P_{SSi}=f(n,t,D,T)$, wherein:

- n is the total number of parking places in the street (2nd granularity level) or in the area NGBH (3rd granularity level);
- t is the current date and time;
- D is the geographical parking-related data; and
- T is the time-related data.

It is then possible to determine an optimised driving path PTH, based on a computation using the segment probability values $SS_1,...,SS_i,...,SS_n$, this optimised driving path PTH being a driving path which maximizes the chances to find a free parking place (400).

Once the optimised driving path PTH has been calculated, it is then provided to the driver U (step 500), for instance to his or her client device which can be implemented as a smartphone or a computer integrated in the driver's vehicle, in order to be displayed on such a device.

If the optimised driving path PTH is determined remotely from the driver U, this optimised driving path PTH can be sent to the driver, in a digital data format which is adapted to the requirements of the driver's client device. Alternatively, this optimised driving path PTH can be sent as a set of instructions to navigate through this optimised driving path.

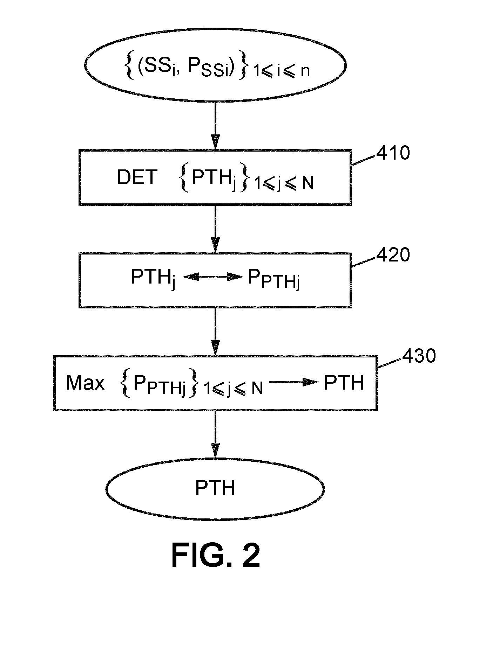

**Figure 2** shows a flow chart illustrating the calculation of the optimised driving path, based on a computation using the segment street values, in accordance with a first embodiment of the present invention.

In this embodiment, a plurality of potential driving paths $PTH_1,...,PTH_j,...,PTH_N$ are first determined (step 410), such potential driving paths being driving paths defined from the current driver's location to the driver's destination in the area NGBH.

Each of these potential driving paths includes a driving path in the area NGBH, defined from a point of entry in this area NGBH to the driver's destination, which includes one or more segment streets $SS_i$. Therefore, each potential driving path $PTH_j$ includes one or more segment streets $SS_i$ of the area NGBH.

Thereafter, for each potential driving path $PTH_j$ a path probability value $P_{PTHj}$ is assigned to this potential driving path $PTH_j$ this path probability value $P_{PTHj}$ being computed using the segment street values $P_{ssi}$ assigned to the segment streets $SS_i$ included this potential driving path $PTH_j$ (step 420).

In particular, for each potential driving path $PTH_j$, the path probability value $P_{PTHj}$ of this potential driving path according to the following equation :

$$P_{PTHj} = 1 - \prod_k (1 - P_{SSk}),$$

where :

- $P_{PTHj}$ is the path probability value which represents the probability of finding a free parking place in the whole potential driving path $PTH_j$;
- $P_{SSk}$ is the segment probability value which represents the probability to find a free parking place in the street segment $SS_k$ ; and
- k is an index which designates all the street segment $SS_k$ included in the potential driving path $PTH_j$.

Once the path probability values $P_{PTH1}$,..., $P_{PTHj}$,...,$P_{PTHN}$ have been assigned respectively to the potential driving path $PTH_1$,...,$PTH_j$,...,$PTH_N$, the potential driving path which is assigned with the highest path probability value $P_{PTHj}$, among the potential driving path $PTH_1$ to $PTH_N$, is selected as being the optimised driving path PTH (step 430). In other words, the optimised driving path PTH is the potential driving path $PTH_j$ for which

$$j = \arg\max_k (P_{PTHk}).$$

Therefore, in this first embodiment, the determination of the optimised driving path PTH is performed on the basis of segment probability values $P_{ssi}$ which are used to compute the path probability values $P_{PTHj}$ of all the potential driving paths to the driver's destination.

In a second embodiment aiming also optimising the driving time to find a free parking place, the determination of the optimised driving path is not only performed on the basis of segment probability values $P_{SSi}$, but also on the basis of segment driving time values $T_{SSi}$.

In this second embodiment, for each street segment $SS_i$, a segment driving time value $T_{SSi}$ is also determined, for instance when the segment probability values $P_{SSi}$ is determined for this street segment $SS_i$ (step 320 as illustrated in figure 1).

This segment driving time value $T_{SSi}$, expressed for instance in seconds, corresponds to the time it takes to drive through the street segment $SS_i$, and can be estimated based on the length $L_i$ of the street segment $SS_i$, as well as on traffic related information (which is advantageously real time information) and/or statistical data collected about the traffic speed $SPD_i$ in the street segment $SS_i$. From such an information, the segment driving time value $T_{SSi}$, can be obtained with the equation $T_{SSi} = L_i / SPD_i$.

Naturally, other types of real time traffic information and/or statistical data can be used to estimate the segment driving time $TSS_i$, such as traffic intensity in the street segment $SS_i$ or other traffic features of this street segment $SS_i$. This traffic related information can be collected, in the area NGBH, at the same time as the parking related information (step 200 as illustrated in figure 1).

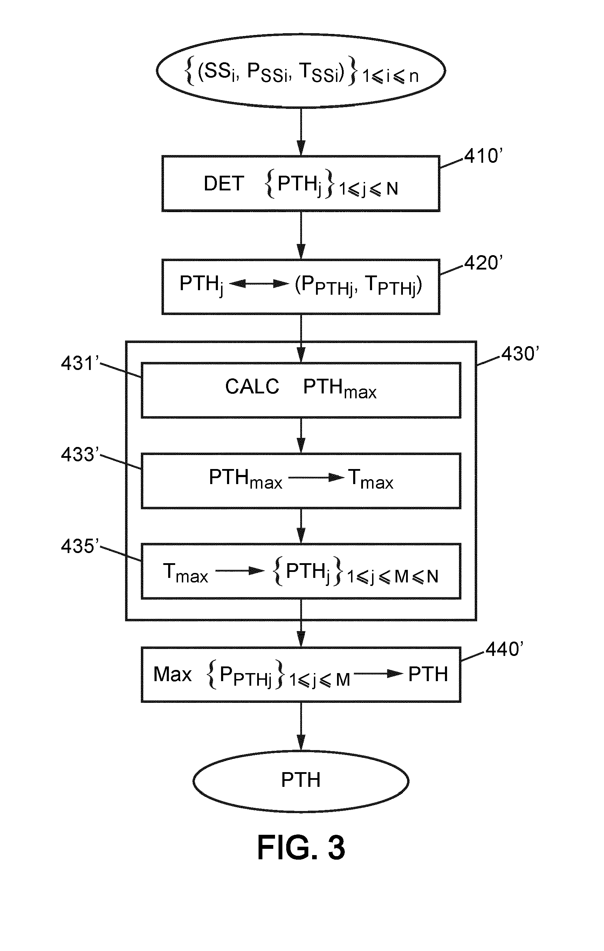

**Figure 3** is a flow chart illustrating the calculation of the optimised driving path, based on a computation using the segment street values and segment driving time values, in accordance with this second embodiment of the present invention.

In this second embodiment, a plurality of potential driving paths $PTH_1$,...,$PTH_j$,...,$PTH_N$ are first determined (step 410'), similarly to the first embodiment.

Thereafter, for each potential driving path $PTH_j$, a path probability value $P_{PTHj}$ and a path driving time value $T_{PTHj}$ are assigned to this potential driving path $PTH_j$ (step 420').

The path probability value $P_{PTHj}$ is computed using the segment street values $P_{SSi}$ assigned to the segment streets $SS_i$ included this potential driving path $PTH_j$, similarly to the first embodiment.

The path driving time value $T_{PTHj}$ is computed based on the segment driving time values $T_{SSi}$ which are assigned to the street segments $SS_i$ included in the potential driving paths, for instance according to the following equation:

$$T_{PTHj} = \sum_k T_{SSk}$$

where :

- $T_{PTHj}$ is the path driving time value which represents the time it takes to drive through the part of the potential driving path $P_{THj}$ which belongs to the area NGBH;
- $T_{SSk}$ is the segment driving time value which represents the time it takes to drive through the street segment $SS_k$; and
- k is an index which designates all the street segment $SS_k$ included in the potential driving path $PTH_j$.

Once path driving time values have been assigned to the potential driving path, one or more potential driving path is selected, among all the potential driving paths, for which the driving time does not exceed a certain threshold. In other words, the potential driving paths which are assigned with a path driving time value $T_{PTHj}$ that is smaller than, or equal to, a maximum driving time threshold $T_{max}$ are selected (step 430').

Such a selection can be implemented as follows:

a) First, one computes the fastest driving path $PTH_{max}$ among all the driving driving paths starting from the driver's location and ending at the driver's destination in the area NGBH (substep 431'). This computation is advantageously performed using a cost optimisation algorithm applied on the segment driving time values $T_{SSi}$.

Such a cost optimisation algorithm can be, for instance, a Dijkstra algorithm which always finds the shortest path and its related cost from a single vertex to a single destination vertex by stopping the algorithm once the shortest path to the destination vertex has been determined.

b) Following the computation of the fastest driving path $PTH_{max}$, it is then possible to derive a maximum driving time threshold $T_{max}$ from this fastest driving path $PTH_{max}$ (substep 433').

In particular, this maximum driving time threshold $T_{max}$ can be derived from the path driving time value $T_{PTHmax}$ that is assigned to this fastest driving path $PTH_{max}$, and which once again typically equals the sum of the segment driving times $T_{SSi}$ of all the segment streets $SS_i$ included in the fastest driving path $PTH_{max}$.

The maximum driving time threshold $T_{max}$ is then obtained, from this minimum driving time $T_{min}$, with the following equation:

$$T_{max} = T_{PTH\,max} * (1 + \varepsilon),$$

wherein $\varepsilon$ is an expansion factor, expressed in percentage and superior to zero, which is defined and set based on the driver's preferences. The higher this factor, the longer the driver is willing to drive before arriving to the destination. For instance, when using an expansion factor $\varepsilon$ of 30 %, $T_{max} = 1,3* T_{PTHmax}$.

This maximum driving time threshold $T_{max}$ represents the maximum amount of time the driver will have to spend in order to arrive to his destination, in the worst case scenario where he cannot find any free parking place along the path.

c) Once the maximum driving time threshold $T_{max}$ has been derived from the fastest driving path $PTH_{max}$, the potential driving paths $PTH_1,...,PTH_j,...,PTH_M$ (where $M \leq N$) assigned with a path driving time value $T_{PTHj}$ less than, or equal to, the maximum driving time threshold $T_{max}$ are selected (substem 435').

In other words, only the potential driving paths whose driving time $T_{PTHj}$ fulfils the relation $T_{PTHmax} \leq T_{PTH} \leq T_{max}$ are kept. The other potential driving paths $PTH_j$ (for which $T_{max} < T_{PTHj}$) are discarded.

The selection of the potential driving path to be designated as being the optimised driving path is then performed (step 440'), similarly to the selection 430 performed in the first embodiment, except that only the potential driving paths which are assigned with a driving time that does not exceed the maximum driving time threshold $T_{max}$ are considered during this selection process. In other words, in this second embodiment, the potential driving path having the highest path driving time value $TP_{THj}$ among a restricted list of potential driving paths, selected in accordance with the maximum driving time threshold $T_{max}$, is defined as being the optimised driving path PTH.

Therefore, in this second embodiment, the optimised driving path PTH is not only optimised in terms of chances to find a free parking place, but also in terms of driving time necessary to find such a free parking place.

In a third embodiment which further takes into account the driving time necessary to find a parking place, apart from the driving time taken to drive through street segments SS, it is also possible to take into account the driving time necessary to cross intersections or bifurcations, which is not considered in the second embodiment but can impact substantially the total driving time.

In this third embodiment, during the area segmentation step 310 illustrated in figure 1, after that the area NGBH has been segmented in a plurality of street segments $SS_i$, a plurality of nodes $N_i$ are defined, theses node $N_i$ corresponding to each location where a street is segmented into two street segments, i.e. at intersections, places where one changes from one street to enter a different street or to make a direction change.

For each node $N_i$, it is then possible to determine (for instance during the determination step 320 illustrated in figure 1) one, or more, node driving time values $T_{Ni,j}$ which corresponds to the driving time for driving through the location designated by the node $N_i$, from the segment street $SS_i$ to the segment street $SS_j$.

As for the segment driving time values, these driving time values are typically estimated based on traffic related information and/or statistical data collected in the area NGBH, for instance at the same time as the parking related information (step 200 as illustrated in figure 1).

These node driving time values $T_{Ni,j}$ can then be assigned to the node $N_i$, for instance during the assignment step 330 illustrated in figure 1 and can be stored in a time cost table which represents all the node driving time values $T_{Ni,j}$ for crossing the location represented by the node $N_i$.

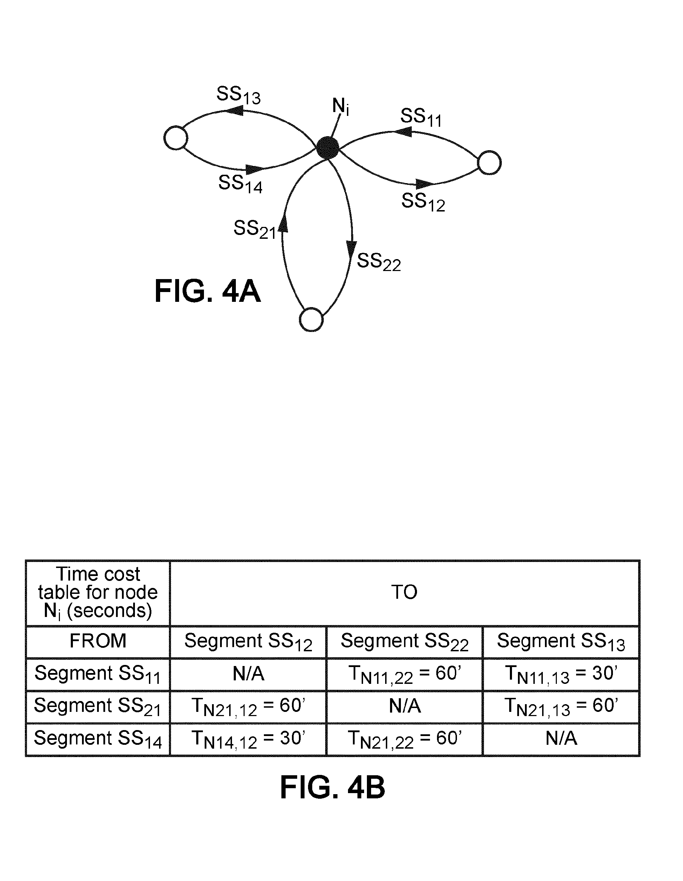

**Figures 4A and 4B** illustrate respectively the definition process of a node $N_i$ and a time cost table associated with this node $N_i$, in accordance with this third embodiment of the present invention.

A topological example is illustrated in figure 4A, where a first two-way street intersects a second two-way street.

In this example, the first two-way street is segmented into four street segments $S_{11}$ to $S_{14}$, due to the intersection of the streets, whereas the second two-way street is segmented into two street segments $S_{21}$ and $S_{22}$.

Here, a node $N_i$ is then defined to represent the intersection of the two streets and node driving time values $T_{Ni,j}$ corresponding to the driving time to go from a street segment $SS_i$ to a street segment $SS_j$ can be as-

signed to this node $N_i$ and stored in a time cost table, illustrated in figure 4B, wherein it appears that the driving time is higher when changing street (see for instance node driving time values $TN_{11,22}$) than when staying in the same street (see for instance node driving time values $T_{N11,13}$), due to the traffic light management.

Once the node driving time values $T_{Ni,j}$ have been assigned for each node $N_i$ in the area NGBH, they can be taken into account during when computing the path driving time value $T_{PTHj}$.

In other words, in this third embodiment, for a given potential driving path $PTH_j$, the path driving time value $T_{PTHj}$ is computed based not only on the segment driving time values $T_{SSi}$ which are assigned to the street segments $SS_i$ included in this potential driving path, but also on the node driving time values $T_{Ni,j}$ assigned to the nodes $N_i$ which connects the street segments $SS_i$ included in this potential driving path, for instance according to the following equation:

$$T_{PTHj} = \sum_k T_{SSk} + \sum_{k',k''} T_{Nk',k''}$$

where :

- $T_{PTHj}$ is the path driving time value which represents the time it takes to drive through the part of the potential driving path $PTH_j$ which belongs to the area NGBH;
- $T_{SSk}$ is the segment driving time value which represents the time it takes to drive through the street segment $SS_k$;
- $T_{Nk,k'}$ is the node driving time value which represents the time it takes to drive through the location designated by a node $N_i$ which connects street segment $SS_k$ with street segment $SS_{k'}$;
- k is an index which designates all the street segment $SS_k$ included in the potential driving path $PTH_j$; and
- k' and k'' are indexes which designate all the pairs of street segment $(SS_{k'},SS_{k''})$, included in the potential driving path $PTH_j$, which are connected via a node $N_i$.

The selection of the potential driving paths can then be carried out, in a similar way to the second embodiment, by comparing the path driving time values $T_{PTHj}$ with a maximum driving time threshold $T_{max}$ derived from the path driving time value $T_{PTHmin}$ assigned to the fastest driving path among all the potential driving paths from the driver's location to the driver's destination.

And the optimised driving path PTH can be found by choosing the potential driving path which is assigned with the highest path probability value $P_{PTHj}$ among the selected potential driving paths, similarly to the second embodiment.

Hence, with this third embodiment, an even better compromise of optimised driving path is obtained, which is more precisely estimated in terms of driving time necessary to find a free parking place.

We refer now to **Figure 5,** which illustrates an example of the segmentation of an area into street segments.

On this figure is shown a map of an area of Barcelona (typically a Google Map, or any other kind of internet map), which is segmented into 60 street segments $SS_1$ to $SS_{60}$.

As can be seen on this figure, these street segments are obtained by dividing the streets of this area according to specific segmentation points. For instance:

- the one-way street named "Calle de Padilla" is divided into five street segments $SS_{11}$ to $SS_{15}$ in accordance with intersecting streets;
- the two-way street named "Calle de José Ortega y Gasset" is divided into two series of five street segments $SS_{16}$ to $SS_{20}$ and $SS_{21}$ to $SS_{25}$ in accordance with intersecting streets, each of the two series being defined for one direction;
- the roundabout on the street named "Calle de Francisco Silvela" generates the street segment $SS_{56}$.

These 60 street segments can thus be assigned with respective segment probability values and segment driving time values, on which the above-mentioned computation can be applied to determine the optimised driving path.

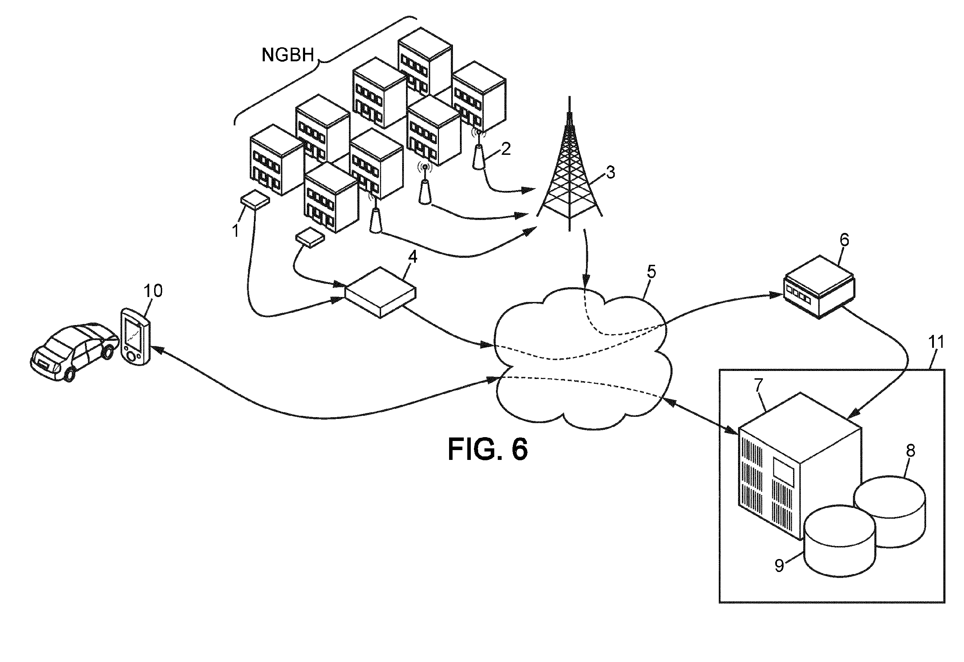

We refer now to **Figure 6,** which shows a system for providing a user with an optimised route path to find a parking place in an area according to the present invention.

In this system, different data collecting units 1 and 2, located on the streets, in the buildings, etc., of the area NGBH, collect traffic, street and parking related information. Such information is advantageously real time information, in order to provide an up-to-date optimised driving path to the driver, and may include (but is not limited to) information about road conditions, events/accidents, traffic jams and/or weather conditions.

In particular, parking related information data can consist in parking occupancy information collected in a real-time manner. In order to collect such real-time information, the data collecting units 1 and 2 can comprise:

- a sensor located on the street. Current sensor technologies allow detection of the occupancy of a specific spot on the street and can transmit this information through a network (wireless or not) to a management system;
- a camera able to carry out surveillance and artificial vision processing, thereby allowing the detection of the occupancy of an area on the street and thus can transmit this information through a network (wireless or not) to a management system;

- a free spot detector (such as a human agent equipped with a GPS reporting device or a vehicle with sensors such as lasers, infrared sensors, ultrasonic sensors or camera based sensors);
- a flow control sensor which detects the number of vehicles entering or leaving a city zone or street.

Apart from real-time information, statistical traffic and parking information can be generated and maintained in order to either substitute or complement real time information. This statistical information can be collected and estimated at different granularity levels, from a street section level to a city wide level, and can comprise statistical data about :

- The number of vehicles per parking place per day;
- The average parking duration;
- Time/calendar patterns, with variations related to different time frames across days and during the year;
- The average Traffic speed;
- The traffic intensity.

These data collecting units 1,2 send the collected information, via a wired connection 4 (for instance an ADSL or a fiber connection) or via a wireless connection 3 (for instance via 3G or UMTS), to a remote computing device 11 through a communication network 5 (for instance the internet network), optionally via a data collecting server 6 which can be used for collecting traffic and parking information.

This remote computing device 11 (for instance a computer or a server) comprises a data processing unit 7 as well as a data providing unit, and is able to poll all the received information and update the parking and traffic status in a main database 9.

Beside, the computing device may advantageously comprise a cartographic database 8, where the maps of potential areas to park in as well as street segments of these areas are stored. Corresponding computed values, such as the segment probability values or the segment driving time values, as well as time cost tables associated with nodes located at street intersections, can also be stored in this cartographic database 8.

Such a cartographic data base can also store topology related information regarding the area NGBH, static in nature, which can be obtained through direct observation, from cartographic sources or local authorities, and can include information about :

- The traffic direction for a street in the area NGBH;
- The number of lanes on each direction;
- Hotspots in the area NGBH such as schools, shopping centers, hospitals, etc.;
- Relevant traffic features such as speed limits, traffic lights, pedestrian crossing sections, etc.;
- The number of parking places.

In the illustrated example, the main database 9 and cartographic database 8 can be separated in order to allow a third party to provide the cartographic data to the cartographic database 8 without granting the access to the main database, but these two databases can also be merged in a single database in the computing device 11.

The computing device 11 may receive a request for an optimised driving path from a driver's client device 10 (for instance a smartphone or an on-board computer), such a request containing information about the driver's current location and the driver's intended destination in the area NGBH.

The computing device 11 is then able to process this request by computing, with its data processing unit, the optimised driving path based on the driver's current location and the driver's desired destination, using the method as previously described, and returns, with its data providing unit, the computed optimised driving path PTH to the driver's client device 10.

The client device 10 has advantageously a wireless connectivity, a GPS functionality and allows the driver to performs the query and inspect (via graphical or textual display) the provided optimised driving path. Optionally, the driver's client device can guide the driver by providing navigation instructions which follow the provided optimised driving path.

The present invention also relates to a computer program product which comprises instruction codes for implementing some, or all, of the steps of the previously described method for providing a driver with an optimised driving path to find a parking place in an area NGBH, when loaded and run on a data processing unit, for instance the data processing unit 7 of the remote computing 11 as shown in figure 6.

The computer program may be stored or distributed on a suitable storage medium supplied together with or as a part of other hardware, but may also be distributed in other forms, such as via the Internet or other wired or wireless telecommunication systems.

While the invention has been illustrated and described in detail in the drawings and foregoing description, such illustration and description are to be considered illustrative or exemplary and not restrictive, the invention being not restricted to the disclosed embodiments. Other variations to the disclosed embodiments can be understood and effected by those skilled in the art in practicing the claimed invention, from a study of the drawings, the disclosure and the appended claims.

For instance, the example of a car driver who wants to park his or her car has been discussed previously. The present application is not limited only to car parking but can apply to any vehicle which can be parked in an area such as a city, for instance motorbikes or trucks.

Beside, different geographical granularity levels have been mentioned previously, when it comes to the parking related information or traffic related information to be collected in order to compute the segment probability values, the segment driving time values and/or the node driving time values. However, different time granularity levels can also be taken into account, when classifying the information collected by the data collecting units :

- A first time granularity level, which corresponds to the real time;
- A second time granularity level, which corresponds to short periods in a single day, such as rush hours, or specific events;
- A third time granularity level, which corresponds to day-based information about workdays, weekends and holidays; and
- A fourth time granularity level, which corresponds to long periods such as a month or a year.

**Claims**

1. A method for providing a driver with an optimised driving path to find a parking place in an area (NGBH), comprising:

    assigning (300) a segment probability value ($P_{SSi}$) to each one of a plurality of street segments ($SS_i$) belonging to said area, wherein the segment probability value ($P_{SSi}$) depends on the probability to find at least one parking place in said street segment;
    determining (400) the optimised driving path (PTH) based on a computation using at least said segment probability values; and
    providing (500) the driver with the calculated optimised driving path.

2. The method of claim 1, wherein the determination (400) of the optimised driving path (PTH) comprises:

    assigning (420,420'), to each one of a plurality of potential driving paths ($PTH_j$) from the driver's location to the driver's destination, a path probability value ($P_{PTHj}$) which is computed using the segment probability values of the segment streets included in said potential driving path; and
    selecting (430,440') the potential driving path which is assigned with the highest path probability value ($P_{PTHj}$) among the plurality of potential driving paths.

3. The method of claim 2, wherein, for each of the plurality of potential driving paths, the path probability value ($P_{PTHj}$) is computed according to the following equation:

$$P_{PTHj} = 1 - \prod_k (1 - P_{SSk}),$$

where:

- $P_{PTHj}$ is the path probability value representing the probability to find at least one free parking place in the potential driving path;
- $P_{SSk}$ is the segment probability value representing the probability to find at least one free parking place in the street segment $SS_k$ ; and
- k is an index which designates all the street segment $SS_k$ included the potential driving path.

4. The method of claims 1 to 3, wherein each of said street segments is further assigned (330) with a segment driving time value ($T_{SSi}$), the optimised driving path (PTH) being further determined based on said segment driving time values.

5. The method of claim 4, wherein the determination of the optimised driving path (PTH) further comprises:

    assigning (420') a path driving time value ($T_{PTHj}$) to each one of a plurality of potential driving paths from the driver's location to the driver's destination, said path driving time value ($T_{PTHj}$) being computed based on the segment driving time values assigned to the street segments included in the potential driving path; and
    selecting (430'), among said potential driving paths, at least one potential driving path which is assigned with a path driving time value that is smaller than, or equal to, a maximum driving time threshold ($T_{max}$);
    wherein the selection (440') of the optimised driving path is performed among said selected potential driving paths.

6. The method of claim 5, wherein, for each potential driving path ($PTH_j$), the path driving time value ($T_{PTHJ}$) is computed according to the following equation:

$$T_{PTHj} = \sum_k T_{SSk}$$

where:

- $T_{PTHj}$ is the path driving time value which represents the time it takes to drive through the part of the potential driving path $PTH_j$ which belongs to the area NGBH;
- $T_{SSk}$ is the segment driving time value which represents the time it takes to drive through the street segment $SS_k$; and

- k is an index which designates all the street segment $SS_k$ included in the potential driving path $PTH_j$.

**7.** The method of claim 5, wherein a plurality of nodes ($N_i$) are defined for all the places connecting at least two street segments in the area (NGBH), each node being assigned with at least one driving time value ($T_{Ni,j}$) representing the driving time to go from one of said street segments to another one of said street segments, and wherein, for each potential driving path ($PTH_j$), the path driving time value ($T_{PTHj}$) is computed according to the following equation:

$$T_{PTHj} = \sum_k T_{SSk} + \sum_{k',k''} T_{Nk',k''}$$

where :

- $T_{PTHj}$ is the path driving time value which represents the time it takes to drive through the part of the potential driving path $PTH_j$ which belongs to the area NGBH;
- $T_{SSk}$ is the segment driving time value which represents the time it takes to drive through the street segment $SS_k$;
- $T_{Nk,k'}$ is the node driving time value which represents the time it takes to drive through the location designated by a node $N_i$ which connects street segment $SS_k$ with street segment $SS_{k'}$;
- k is an index which designates all the street segments $SS_k$ included in the potential driving path $PTH_j$; and
- k' and k" are indexes which designate all the pairs of street segments ($SS_{k'}$, $SS_{k''}$), included in the potential driving path $PTH_j$, which are connected via a node $N_i$.

**8.** The method of any one of claims 5 to 7, wherein the selection (430') of the plurality of potential driving paths comprises:

computing (441') the fastest driving path ($PTH_{max}$) among all the potential driving paths from the driver's location to the driver's destination, using a cost optimisation algorithm applied on the segment driving time values;
computing (443') the maximum driving time threshold ($T_{max}$) according to the following equation :

$$T_{max} = T_{PTH\,max} * (1 + \varepsilon),$$

wherein :

- $T_{max}$ is the maximum driving time threshold;
- $T_{PTHmax}$ is the path driving time value which is assigned to the fastest driving path $PTH_{max}$; and
- $\varepsilon$ is an expansion factor, with $\varepsilon > 0$.

**9.** The method of any one of claims 1 to 8, further comprising collecting (200) parking related information and/or traffic related information in the area (NGBH), said parking related information and/or traffic related information being used to compute the segment probability values ($P_{SSi}$) and/or the segment driving time values ($T_{SSi}$).

**10.** The method of any one of claims 1 to 9, further comprising identifying (100) the area based on the driver's destination in said area.

**11.** Computer program product comprising instructions codes for implementing the steps of a method for providing a driver with an optimised driving path to find a parking place in an area according to any one of claims 1 to 10, when loaded and run on processing means of a data processing unit.

**12.** A computing device (11) for providing a driver with an optimised driving path to find a parking place in an area (NGBH), the device comprising a data processing unit (7) and a data providing unit configured to provide the optimised driving path to the driver, wherein the data processing unit (7) is configured to:

determine a plurality of street segments ($SS_i$) belonging to said area ;
assign, to each of said street segments, at least a segment probability value ($P_{SSi}$) depending on the probability to find at least one parking place in said street segment; and
determine the optimised driving path (PTH) based on a computation using said segment probability values.

**13.** The computing device of claim 12, wherein the data processing unit (7) is further configured to assign, to each of the street segments, a segment driving time value ($T_{SSi}$), the determination of the optimised driving path (PTH) being based on a computation which uses said segment driving time values.

**14.** A system for providing a driver with an optimised driving path to find a parking place in an area (NGBH), the system comprising a computing device (11) according to claim 12 or 13 and a client device (10) having a display screen, the data providing unit of the computing device being configured to transmit digital data representing the optimised driving path to the client device, and the client device being configured to display the optimised driving path on its display screen, based on the digital data representing the optimised driving path.

15. The system according to claim 14, further comprising at least one data collecting unit (1,2) located in the area (NGBH), wherein the data collecting unit is configured to transmit parking related information and/or traffic related information to the computing device (11), said parking related information and/or traffic related information being used in a computation, performed by the data processing unit of the computing device, in order to determine the optimised driving path (PTH).

**FIG. 1**

$$\left\{ (SS_i,\ P_{SSi}) \right\}_{1 \leqslant i \leqslant n}$$

$$\text{DET} \quad \left\{ PTH_j \right\}_{1 \leqslant j \leqslant N} \qquad 410$$

$$PTH_j \longleftrightarrow P_{PTHj} \qquad 420$$

$$\text{Max} \left\{ P_{PTHj} \right\}_{1 \leqslant j \leqslant N} \longrightarrow PTH \qquad 430$$

PTH

# FIG. 2

$$\left\{ (SS_i, P_{SS_i}, T_{SS_i}) \right\}_{1 \leqslant i \leqslant n}$$

DET $\left\{ PTH_j \right\}_{1 \leqslant j \leqslant N}$ —— 410'

$PTH_j \longleftrightarrow (P_{PTH_j}, T_{PTH_j})$ —— 420'

—— 430'

431' —— CALC $PTH_{max}$

433' —— $PTH_{max} \longrightarrow T_{max}$

435' —— $T_{max} \longrightarrow \left\{ PTH_j \right\}_{1 \leqslant j \leqslant M \leqslant N}$

Max $\left\{ P_{PTH_j} \right\}_{1 \leqslant j \leqslant M} \longrightarrow PTH$ —— 440'

PTH

# FIG. 3

FIG. 4A

| Time cost table for node $N_i$ (seconds) | TO | | |
|---|---|---|---|
| FROM | Segment $SS_{12}$ | Segment $SS_{22}$ | Segment $SS_{13}$ |
| Segment $SS_{11}$ | N/A | $T_{N11,22} = 60'$ | $T_{N11,13} = 30'$ |
| Segment $SS_{21}$ | $T_{N21,12} = 60'$ | N/A | $T_{N21,13} = 60'$ |
| Segment $SS_{14}$ | $T_{N14,12} = 30'$ | $T_{N21,22} = 60'$ | N/A |

FIG. 4B

FIG. 5

FIG. 6

Europäisches
Patentamt

European
Patent Office

Office européen
des brevets

## EUROPEAN SEARCH REPORT

Application Number

EP 11 30 6383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 075 538 A2 (AISIN AW CO [JP]) 1 July 2009 (2009-07-01)<br><br>* paragraphs [0023], [0030] - [0055]; claim 1; figures 3,6-8 * | 1,2,4, 9-12,14, 15 | INV. G01C21/34 |
| E | WO 2011/157296 A1 (TOMTOM INT BV [NL]; GEELEN PIETER [NL]; EISENBERG JACOB [NL]) 22 December 2011 (2011-12-22) * page 5, lines 9-31; figure 6 * * page 19, lines 8-11 * | 1 | |
| A | WO 2010/081547 A1 (TOMTOM INT BV [NL]; GEELEN PIETER [NL]) 22 July 2010 (2010-07-22) * figure 28 * | 1,11,12, 14 | |

TECHNICAL FIELDS
SEARCHED (IPC)

G01C

~~The present search report has been drawn up for all claims~~

| Place of search | Date of completion of the search | Examiner |
|---|---|---|
| The Hague | 29 March 2012 | de la Rosa Rivera, E |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 11 30 6383

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2012

| Patent document cited in search report | | Publication date | Patent family member(s) | | Publication date |
|---|---|---|---|---|---|
| EP 2075538 | A2 | 01-07-2009 | CN<br>EP<br>JP<br>US | 101470004 A<br>2075538 A2<br>2009162567 A<br>2009171566 A1 | 01-07-2009<br>01-07-2009<br>23-07-2009<br>02-07-2009 |
| WO 2011157296 | A1 | 22-12-2011 | NONE | | |
| WO 2010081547 | A1 | 22-07-2010 | EP<br>US<br>WO | 2387697 A1<br>2012098677 A1<br>2010081547 A1 | 23-11-2011<br>26-04-2012<br>22-07-2010 |

EPO FORM P0459

For more details about this annex : see Official Journal of the European Patent Office, No. 12/82

Europäisches
Patentamt

European
Patent Office

Office européen
des brevets

## LACK OF UNITY OF INVENTION
### SHEET B

Application Number

EP 11 30 6383

The Search Division considers that the present European patent application does not comply with the requirements of unity of invention and relates to several inventions or groups of inventions, namely:

1. claims: 1-4, 9-15

    Determining a driving path based on the highest value of the probability to find at least one free street parking space in potential driving paths.

    ---

2. claims: 5-8

    Calculating a driving path based on street parking place segment probability values and potential path driving time values.

    ---

Europäisches
Patentamt

European
Patent Office

Office européen
des brevets

**Application Number**

EP 11 30 6383

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 9-15

☐ The present supplementary European search report has been drawn up for those parts of the European patent application which relate to the invention first mentioned in the claims (Rule 164 (1) EPC).

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100017118 A
- US 20110106425 A